# FASCICULE DE BREVET EUROPEEN

(11) **EP 0 896 123 B1**
(45) Date de publication et mention de la délivrance du brevet: **27.07.2005**
(21) Numéro de dépôt: 98401932.3
(22) Date de dépôt: 29.07.1998
(51) Int. Cl.: E21B 37/06, F17D 1/05, F17D 1/16, F17D 1/00, F15D 1/02, C10L 3/00

(54) **Procédé pour ralentir la croissance et/ou l'agglomération et éventuellement retarder la formation d'hydrates dans un effluent de production**
Verfahren zur Hemmung des Wachstums und/oder der Anhäufung und gegebenenfalls der Bildung von Hydraten in Produktionsabflüssen
Process to slow down the growth and/or the agglomeration and possibly delaying the formation of hydrates in a production effluent

(30) Priorité: 05.08.1997 FR 9710118; 05.08.1997 FR 9710119
(43) Date de publication de la demande: 10.02.1999
(73) Titulaire: Institut Français du Pétrole, 92500 Rueil Malmaison (FR)
(72) Inventeur: Sinquin, Anne, 92000 Nanterre (FR); Velly, Marie, 78360 Montesson (FR); Gateau, Patrick, 78310 Maurepas (FR); Durand, Jean-Pierre, 78400 Chatou (FR)

(56) Documents cités:
- EP-A- 0 323 307
- EP-A- 0 323 774
- EP-A- 0 323 775
- EP-A- 0 582 507
- EP-A- 0 594 479
- EP-A- 0 740 048
- EP-A- 0 812 977
- WO-A-95/19408
- WO-A-96/29501
- WO-A-96/29502
- WO-A-97/13824
- DATABASE WPI Section Ch, Week 8845 Derwent Publications Ltd., London, GB; Class E19, AN 88-320879 XP002063477 & SU 1 391 692 A (NAT GAS TRANSP) , 30 avril 1988

## Description

L'invention concerne un procédé pour inhiber ou retarder la formation, la croissance ou/et l'agglomération des hydrates de gaz naturel, de gaz de pétrole ou d'autres gaz, par utilisation d'au moins un additif. Les gaz qui forment des hydrates peuvent notamment comprendre au moins un hydrocarbure choisi parmi le méthane, l'éthane, l'éthylène, le propane, le propène, le n-butane et l'iso-butane, et éventuellement de l'H₂S et/ou du CO₂.

Ces hydrates se forment lorsque l'eau se trouve en présence de gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition des gaz connue et lorsque leur pression est fixée.

La formation d'hydrates peut être redoutée, notamment dans l'industrie pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement, lorsque les conditions thermodynamiques requises pour former des hydrates sont réunies, l'agglomération des hydrates entraîne le blocage des conduites de transport par création de bouchons qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive, par l'abaissement de la température de l'effluent produit, que les conditions thermodynamiques soient réunies pour que des hydrates se forment, s'agglomèrent et bloquent les conduites de transfert. La température au fond de la mer peut être, par exemple, de 3 ou 4 °C.

Des conditions favorables à la formation d'hydrates peuvent aussi être réunies de la même façon à terre, pour des conduites pas (ou pas assez profondément) enfouies dans le sol terrestre, lorsque par exemple la température de l'air ambiant est basse.

Pour éviter ces inconvénients, on a cherché, dans l'art antérieur, à utiliser des produits qui, ajoutés au fluide, pourraient agir comme inhibiteurs en abaissant la température thermodynamique de formation des hydrates. Ce sont notamment des alcools, tels que le méthanol, ou des glycols, tels que le mono-, le di- ou le tri-éthylèneglycol. Cette solution est très onéreuse car la quantité d'inhibiteurs à ajouter peut atteindre 10 à 40 % de la teneur en eau et ces inhibiteurs sont difficiles à récupérer complètement.

On a également préconisé l'isolation des conduites de transport, de manière à éviter que la température du fluide transporté n'atteigne la température de formation des hydrates dans les conditions opératoires. Une telle technique est, elle aussi, très coûteuse.

On a encore décrit l'utilisation d'additifs capables de modifier le mécanisme de formation des hydrates, puisque, au lieu de s'agglomérer rapidement les uns aux autres et de former des bouchons, les hydrates formés se dispersent dans le fluide sans s'agglomérer et sans obstruer les conduites. On peut citer à cet égard : la demande de brevet EP-A-323774 au nom de la demanderesse, qui décrit l'utilisation de composés amphiphiles non-ioniques choisis parmi les esters de polyols et d'acides carboxyliques, substitués ou non-substitués, et les composés à fonction imide ; la demande de brevet EP-A-323775, également au nom de la demanderesse, qui décrit notamment l'utilisation de composés appartenant à la famille des diéthanolamides d'acides gras ou de dérivés d'acides gras ; le brevet US-A-4856593 qui décrit l'utilisation de composés tensioactifs tels que des phosphonates organiques, des esters phosphates, des acides phosphoniques, leurs sels et leurs esters, des polyphosphates inorganiques et leurs esters, ainsi que des homopolyacrylamides et des copolymères acrylamide-acrylates ; et la demande de brevet EP-A-457375, qui décrit l'utilisation de composés tensioactifs anioniques, tels que les acides alkylarylsulfoniques et leurs sels de métaux alcalins.

Des composés amphiphiles obtenus par réaction d'au moins un dérivé succinique choisi dans le groupe formé par les acides et les anhydrides polyalkénylsucciniques sur au moins un monoéther de polyéthylèneglycol ont également été proposés pour réduire la tendance à l'agglomération des hydrates de gaz naturel, de gaz de pétrole ou d'autres gaz (demande de brevet EP-A-582507).

Par ailleurs, on a également préconisé l'utilisation d'additifs capables d'inhiber ou de retarder la formation et/ou la croissance des hydrates. On peut citer à cet égard la demande de brevet EP-A-536950, qui décrit l'utilisation de dérivés de la tyrosine, la demande internationale WO-A-9325798, qui décrit l'utilisation de composés homopolymères et copolymères de la N-vinyl-2-pyrrolidone et leurs mélanges, la demande internationale WO-A-9412761 et le brevet US-A-5432292 qui décrivent l'utilisation de la poly(N-vinyl-2-pyrrolidone), de l'hydroxyéthyl cellulose et de leurs mélanges ou d'un terpolymère à base de N-vinyl-2-pyrrolidone, N-vinyl-ε-caprolactame et de diméthylaminoéthyl méthacrylate, commercialisé sous le nom de GAFFIX VC-713. La demande internationale WO-A-9519408 décrit plus généralement l'utilisation de polymères aliphatiques contenant des N-hétérocycles carbonylés dans des formulations complexes. Il en est de même de la demande internationale WO-A-9532356, qui décrit notamment l'utilisation de terpolymère à base de N-vinyl-2-pyrrolidone, d'acrylamido méthyl propane sulfonate et d'acrylamide. Enfin, les demandes internationales WO-A-9517579 et WO-A-9604462 décrivent l'utilisation de dérivés ammonium, sulfonium et phosphonium alkylés, soit seuls, soit mélangés à un inhibiteur de corrosion.

On connaît encore :
- la demande de brevet EP-A-740048, qui divulgue l'utilisation d'un copolymère hydrophobe-hydrophile hydrosoluble comportant une chaîne polyoxyalkylène reliée à ses extrémités à deux groupements hydrophobes ;
- la demande de brevet EP-A-594479, qui divulgue l'utilisation de polymères et copolymères contenant des séquences oxyalkylènes de 2 et éventuellement de 3 atomes de carbone, essentiellement des polyéthylèneglycols et leurs monoéthers et les copolymères séquencés d'oxyde d'éthylène et d'oxyde de propylène formés sur un polypropylène glycol par condensation d'oxyde d'éthylène, ou sur l'éthylène diamine par condensation d'oxyde de propylène puis d'oxyde d'éthylène ;
- la demande de brevet EP-A-323307, qui mentionne de manière très générale l'utilisation d'esters de polyols, tels que le polyétliylèneglycol, sans donner aucune indication sur la nature de l'acide carboxylique, ni sur la constitution particulière des esters ;
- la demande internationale WO-A-9629502, qui mentionne l'utilisation d'hydroxy alkyl esters de propylène glycol d'acide polyuronique ;
- la demande de brevet EP-A-812977, qui décrit l'utilisation d'additifs organosolubles définis comme étant des copolymères séquencés polyisobutène - polyéthylèneglycol (formés entre, d'une part, un anhydride polyisobutènylsuccinique et, d'autre part, un polyéthylèneglycol ou un monoéther alkylique de polyéthylèneglycol) et des copolymères (méth-) acrylate d'alkyle - monomère azoté.

On a maintenant découvert que certains composés essentiellement hydrosolubles à base de macromomères de polyoxyalkylène glycol, polymérisés ou non, permettent, à de faibles concentrations, de retarder la croissance et/ou l'agglomération des hydrates de gaz naturel, de gaz de pétrole ou d'autres gaz, avec une très grande efficacité. Eventuellement, ces composés présentent également un effet d'inhibiteur de formation des hydrates.

Dans la suite, on désignera par macromère aussi bien le composé polymérisable comportant dans sa molécule un enchaînement d'au moins 2 motifs oxyde d'alkylène, que l'unité entrant dans la constitution de polymères (homopolymères ou copolymères).

Ainsi, dans un premier mode de réalisation, l'invention propose tout d'abord un procédé pour retarder la croissance et/ou l'agglomération et éventuellement pour retarder la formation des hydrates au sein d'un fluide comprenant de l'eau et un gaz, dans des conditions où des hydrates peuvent se former (à partir de l'eau et du gaz), caractérisé en ce qu'on incorpore audit fluide au moins un macromère de polyoxyalkylène glycol et/ou au moins un polymère formé d'un ou de plusieurs macromères de polyoxyalkylène glycol, essentiellement hydrosoluble, lesdits macromères de polyoxyalkylène glycol étant définis par la formule générale (**A**) ci-dessous : 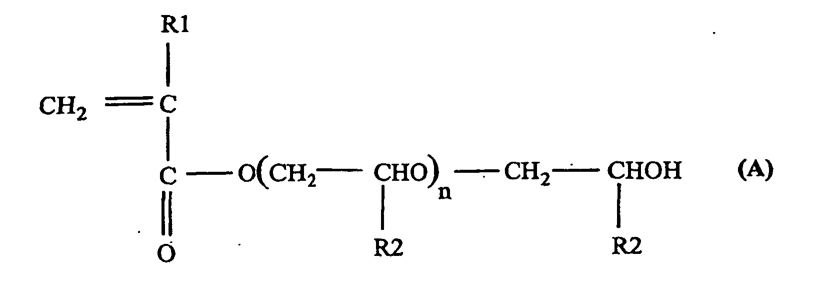 dans laquelle R1 représente un hydrogène ou un groupement alkyle comportant de 1 à 6 atomes de carbone et de préférence de 1 à 4 atomes de carbone ; R2 représente un atome d'hydrogène ou un groupement alkyle; n représente le degré de polymérisation et a une valeur comprise entre 1 et 140, de préférence de 3 à 140.

Les macromères définis par la formule générale (A), essentiellement hydrosolubles et comportant au moins un enchaînement polyoxyalkylène glycol, peuvent être utilisés soit sous forme de composés simples, soit sous forme de polymères.

Les polymères sont soit des homopolymères, c'est-à-dire des enchaînements d'un seul et même motif macromère, soit des copolymères, c'est-à-dire des polymères constitués d'au moins deux unités différentes définies par la formule (A). Ces copolymères sont des polymacromères composés d'au moins deux macromères qui diffèrent par les groupements latéraux R2 liés aux groupements oxyalkylène, et/ou par les groupements R1 liés au squelette macromoléculaire et/ou par le nombre d'enchaînements n de groupements (CH₂-CHOR₂) présents sur le macromère.

Les macromères et polymères décrits dans invention ont des masses moléculaires moyennes qui peuvent varier entre 160 g.mol⁻¹ et plusieurs millions, selon le nombre n de motifs oxydes d'alkylène dans le macromère et selon le nombre d'unités macromères dans les homo ou copolymères. Les masses moléculaires moyennes préférées sont de 250 à plusieurs millions.

Dans le procédé de l'invention, les macromères, les homo et copolymères tels que décrits ci-dessus peuvent être ajoutés dans le fluide à traiter seuls ou sous forme de mélanges de deux ou plusieurs d'entre eux. Lorsque plusieurs macromères, homopolymères ou copolymères sont utilisés en mélange, il peut s'agir de macromères, d'homopolymères ou de copolymères qui diffèrent entre eux par exemple par la nature des motifs qui les composent et/ou par leur masse moléculaire.

Les macromères, les homo ou copolymères, ainsi que leurs mélanges en toutes proportions peuvent être ajoutés dans le fluide à traiter à des concentrations allant en général de 0,05 à 5 % en masse, de préférence de 0,1 à 2 % en masse, par rapport à l'eau présente dans le fluide à traiter.

Par ailleurs, les macromères, les homo ou copolymères préconisés comme additifs dans l'invention peuvent être mélangés à un ou plusieurs alcools (monoalcools ou polyols) renfermant par exemple de 1 à 6 atomes de carbone, plus particulièrement le mono-, le di- ou le tri-éthylèneglycol, l'éthanol ou le méthanol, ce dernier étant l'alcool préféré. Cet alcool (ou ces alcools) est (sont) ajouté(s) en général en des proportions allant de 0,5 à 20 % en masse, de préférence de 1 à 10 % en masse, par rapport à l'eau présente dans le fluide à traiter. Le (ou les) macromère(s), homopolymère(s) ou copolymère(s) considéré(s) dans l'invention peut(vent) être alors préalablement dissous en milieu hydro-alcoolique et ensuite ajouté(s) au milieu à traiter, de façon à obtenir des concentrations finales en macromère(s), homopolymère(s) ou copolymère(s) allant en général de 0,05 à 5 % en masse, de préférence de 0,1 à 2 % en masse par rapport à l'eau présente dans le fluide à traiter.

La présence dans le milieu d'additif(s) retardant la croissance et/ou l'agglomération et ayant éventuellement un effet inhibiteur de formation tels que les macromère(s), homo ou copolymère(s) ou encore de mélanges de ces composés préconisés dans l'invention et d'alcool(s) tels que par exemple le méthanol, permet, par leurs actions conjuguées, d'obtenir des retards à la croissance des hydrates et un fort ralentissement de la formation de bouchon dans les conduites et ce, d'une part, en diminuant les quantités d'additifs utilisés (alcool et polymères) et, d'autre part, en permettant surtout d'opérer dans une gamme de températures beaucoup plus basses.

Les macromères, homo ou copolymères essentiellement hydrosolubles considérés dans l'invention peuvent être utilisés soit en milieu eau pure, par exemple dans de l'eau de condensation, soit en milieu salin, par exemple dans de l'eau de production, dans l'eau de mer ou dans la saumure.

On a également découvert que l'association des composés essentiellement hydrosolubles à base de macromomères de polyoxyalkylène glycol tels que décrits ci-dessus, qui ralentissent la croissance et/ou l'agglomération des hydrates, avec des composés inhibiteurs cinétiques connus essentiellement pour retarder la formation des hydrates présente une excellente efficacité pour modifier le mécanisme de formation des hydrates tout en limitant la vitesse à laquelle les hydrates se forment et leur tendance à l'agglomération. Ces composés (ou ces mélanges de composés) comportant les deux types de structures sont utilisés à de faibles concentrations. Le procédé s'applique aux hydrates de gaz naturel, de gaz de pétrole ou d'autres gaz, avec une très grande efficacité.

Cette modification du mécanisme de formation, de croissance et/ou d'agglomération des cristaux peut être mise à profit pour le transport de fluides comprenant un gaz susceptible de former des hydrates et de l'eau. Elle peut également être utilisée dans les boues de forage à base d'huile ou à base d'eau de façon à éviter les problèmes liés aux hydrates lors des opérations de forage.

Lorsque le procédé est appliqué au transport de fluides dans une conduite, c'est-à-dire au transport de gaz et d'eau en présence éventuellement d'une phase hydrocarbure liquide de type condensat ou huile, l'additif ou mélange d'additifs peut être injecté en continu ou en batch dans la conduite en amont de la portion de la conduite où les conditions thermodynamiques sont réunies pour former des hydrates. L'ajout de l'additif ou du mélange d'additifs permet premièrement de retarder la formation des hydrates même si les conditions thermodynamiques dans le milieu sont telles que les hydrates sont susceptibles de se former et deuxièmement de contrôler la croissance et l'agglomération des cristaux dès qu'ils commencent à se former dans la conduite. On observe que l'action d'inhibition de croissance et de dispersion conduit à la formation lente de petits cristaux qui restent dispersés dans le fluide. A l'inverse, dans le cas de l'addition d'un inhibiteur cinétique qui agit essentiellement sur la formation des hydrates, on observe que les hydrates croissent de manière explosive dès que ledit inhibiteur devient inefficace par une chute trop importante de la température - dépassement du sous refroidissement maximal supporté par l'additif - ou par un séjour trop long du fluide dans la zone où les hydrates peuvent se former - typiquement lors d'un arrêt de production prolongé.

Lorsque le procédé est appliqué aux opérations de forage, l'additif ou mélange d'additifs peut être additionné aux boues via les bacs à boues en tête de puits.

Ainsi, selon un second mode de réalisation, la présente invention propose un procédé pour retarder la formation des hydrates et réduire leur vitesse de croissance et leur tendance à l'agglomération au sein d'un fluide comprenant au moins de l'eau et des hydrocarbures susceptibles de former des hydrates, dans des conditions de température et de pression où ces hydrates peuvent se former, caractérisé en ce que l'on incorpore audit fluide
- un mélange d'additifs comprenant
   au moins un composé comportant au moins un enchaînement d'au moins deux motifs oxydes d'alkylène sous la forme d'un macromère, unité polymérisable comportant un polyoxyde d'alkylène en chaîne latérale, tel qu'il a été défini précédemment
   et au moins un inhibiteur cinétique des hydrates ;
- ou un additif comprenant au moins un copolymère formé entre au moins un macromère tel que défini ci-dessus et au moins une structure de type additif cinétique.

Dans une première variante de ce mode de réalisation du procédé de l'invention, l'effet conjugué inhibiteur cinétique + inhibiteur spécifique de croissance et/ou d'agglomération peut d'abord être obtenu par le biais d'une formulation qui comprend, associés aux composés comportant au moins un enchaînement d'au moins deux motifs oxydes d'alkylène sous la forme d'un macromère, unité polymérisable comportant un polyoxyde d'alkylène en chaîne latérale, comme indiqué ci-dessus, des homopolymères de monomères de type cinétique ou des copolymères comportant uniquement des monomères de type cinétique ou encore des polymères naturels ayant un effet cinétique ou des tensioactifs.

Comme déjà décrit plus haut, l' (ou les) inhibiteur(s) spécifique(s) de croissance et/ou d'agglomération est (sont) choisi(s) parmi les macromères définis par la formule générale (A), les polymères contenant les macromères définis en (A) soit sous la forme d'homopolymères, c'est-à-dire des enchaînements d'un seul et même motif macromère, soit sous la forme de copolymères, c'est-à-dire des polymères constitués d'au moins deux unités différentes toutes deux définies par la formule (A) et qui diffèrent par les groupements latéraux liés aux groupements oxyalkylène R2, et/ou par les groupements R1 liés au squelette macromoléculaire et/ou par le nombre d'enchaînements (CH₂-CHOR₂) présents sur le macromère. Ces macromères et polymères décrits dans l'invention ont des masses moléculaires moyennes qui peuvent varier entre 160 g.mol⁻¹ et plusieurs millions, de préférence de 250 g. mol⁻¹ à plusieurs millions.

Les inhibiteurs cinétiques des hydrates peuvent être des homopolymères ou des copolymères formés sur des monomères inhibiteurs cinétiques agissant sur les processus de nucléation et éventuellement de croissance des hydrates et choisis par exemple parmi :
- le N-vinyl-2-lactame avec un cycle lactame comprenant de 5 à 7 atomes, les cycles lactame pouvant également être modifiés par des chaînes alkyle, par exemple la N-vinyl-2-pyrrolidone ou la N-vinyl-2-caprolactame,
- l'acrylate de sodium, le méthacrylate de sodium ou encore les esters d'acrylate ou de méthacrylate possédant des groupements organiques comportant éventuellement des hétéroatomes et étant éventuellement chargés positivement, négativement ou encore possédant à la fois des charges positive et négative,
- l'acrylamide, le méthacrylamide ou encore l'acrylamide ou le méthacrylamide N- ou N,N-substitué par des groupements organiques linéaires ou cycliques comportant éventuellement des hétéroatomes et étant éventuellement chargés positivement, négativement ou encore possédant à la fois des charges positive et négative.
- le N-vinyl acétamide ou le N-alkyl vinyl acétamide,
- un carboxylate de vinyle et
- une N-acyl polyalkylène imine, telle que par exemple la 2-éthyl-2-oxazoline.

Lesdits polymères peuvent comporter un ou plusieurs monomères parmi ceux décrits ci-dessus. Dans le cas des copolymères, les monomères considérés seront au moins au nombre de deux et seront incorporés dans le copolymère dans des proportions allant de 1 % à 99 % molaire suivant la nature des monomères et leur réactivité relative les uns par rapport aux autres. On peut citer comme exemples, mais sans que ces exemples soient limitatifs, des copolymères tels que N-vinyl-2-pyrrolidone/N-vinyl-caprolactame (NVP/NVCap), NVP/NVCap/dialkyl acrylate ou encore Acrylamide/Acrylamido diméthyl propane sulfonate (AA/AMPS).

Ces mélanges sont en général additionnés au fluide à traiter à des concentrations qui peuvent aller de 0,05 % à 5 %, et de préférence entre 0,1 et 2 %, en masse par rapport à la teneur en eau du milieu. Les proportions respectives d'additif de type cinétique par rapport à l'additif inhibiteur de croissance et/ou d'agglomération peuvent varier de 5 à 80 % et de 20 à 95 % en masse et de préférence respectivement de 20 à 60 % et de 40 à 80 % en masse.

A la liste des homopolymères et copolymères de type cinétique cités ci-dessus, on peut également ajouter des polymères naturels et des tensioactifs, ainsi que des dérivés d'acides aminés, ayant un effet sur la cinétique de formation des hydrates :
- les polysaccharides naturels comme l'hydroxy éthyl cellulose (HEC) et autres dérivés cellulosique, les carraghénanes, le guar, l'agar, la gomme arabique, la caroube, le xanthane, les alginates et propylène glycol alginates, etc.;
- les tensioactifs composés d'une partie hydrophobe dérivée d'un alcool, d'un acide gras, de dérivés alkylés du phénol, de polyoléfines, de chaînes alkyles longues et d'une tête polaire qui peut être :
   - anionique, de type alcoolate, sulfate, sulfonate, phosphate, phosphonate ou acide phosphonique,
   - cationique, de type ammonium, phosphonium ou sulfonium
   - ou neutre ; et
- comme dérivés d'acides aminés, on peut citer par exemple les dérivés de la tyrosine.

Dans une seconde variante de ce mode de réalisation du procédé de l'invention, les deux types d'additifs inhibiteurs cinétiques et inhibiteurs de croissance et/ou d'agglomération définis par les structures mentionnées ci-dessus peuvent être réunis dans un seul et même copolymère. Dans ce copolymère, un (ou plusieurs) monomère(s) de type cinétique peu(ven)t être associé(s) à un (ou plusieurs) macromère(s) inhibiteur(s) de croissance et/ou d'agglomération. Les copolymères résultants ont des masses moléculaires moyennes comprises entre 1000 et 10⁶ et sont essentiellement hydrosolubles.

Dans ces copolymères comportant à la fois des structures retardant la croissance et/ou l'agglomération des hydrates et des structures inhibitrices cinétiques, les structures retardant la croissance et/ou l'agglomération des hydrates sont des macromères comportant au moins un enchaînement polyoxyalkylène glycol, en général tels que définis par la formule générale (A) donnée plus haut et les monomères inhibiteurs cinétiques agissant sur les processus de nucléation et éventuellement de croissance des hydrates peuvent être choisis parmi ceux déjà énumérés plus haut.

Les copolymères considérés sont préférentiellement définis par la formule générale (B) ci-dessous : 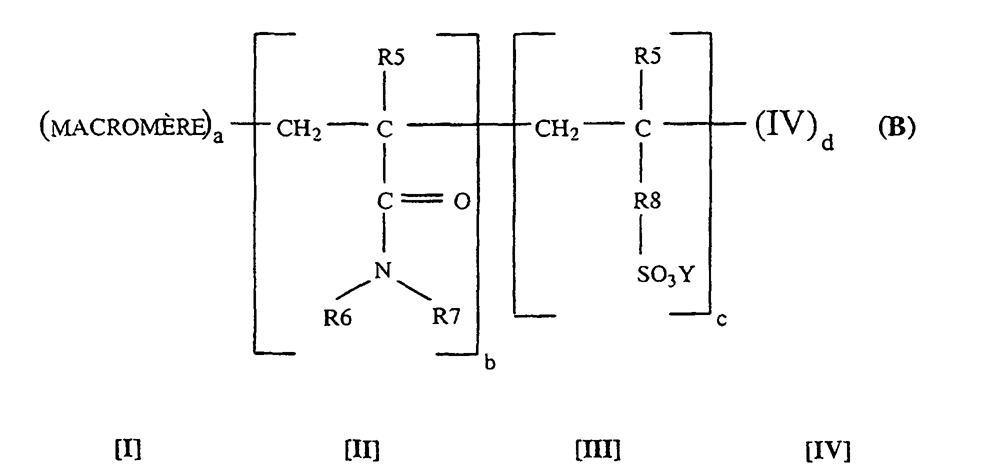 dans laquelle l'entité MACROMÈRE représente au moins une unité macromère définie par la formule générale (A), R5 est un atome d'hydrogène ou un groupement méthyle, R6 est un atome d'hydrogène ou un groupement hydrocarboné de type alkyle, cycloalkyle, aryle ou alkylaryle contenant de 1 à 30 atomes de carbone, R7 est un atome d'hydrogène ou un groupement hydrocarboné de type alkyle, cycloalkyle, aryle ou alkylaryle contenant de 1 à 30 atomes de carbone, R6 et R7 pouvant être identiques ou différents ; R8 est choisi parmi la liaison simple, les groupements divalents CH₂ et les groupements divalents -C₆H₄- et -CONHC(CH₃)₂-CH₂-, Y est un atome d'hydrogène, un atome de métal alcalin ou un groupement ammonium. Le monomère (IV) est choisi parmi les structures cinétiques décrites ci-dessus et est tel qu'il soit différent des monomères [I], [II] et [III].

La formule du copolymère (B) est telle que la somme a + b+ c + d = 1, avec a compris entre 0,01 et 1 et b, c et d compris chacun entre 0 et 0,99.

En vue d'obtenir les meilleures performances possibles et d'adapter l'additif au fluide à traiter, l'addition d'un mélange de plusieurs copolymères définis par la formule générale (B) peut être envisagée.

Le (ou les) copolymère(s) défini(s) par la formule (B) est (sont) additionné(s) au fluide à traiter à des concentrations qui peuvent aller de 0,05 à 5 % et de préférence entre 0,1 et 2 % en masse par rapport à la teneur en eau du milieu.

Par ailleurs, il est également possible dans ce cas d'ajouter aux copolymères comportant à la fois des structures retardant la croissance et/ou l'agglomération des hydrates et des structures inhibitrices cinétiques mélanges des homopolymères et copolymères de type cinétique cités ci-dessus, des polymères naturels et/ou des tensioactifs ayant un effet sur la cinétique de formation des hydrates, tels que ceux déjà mentionnés plus haut, ainsi que des dérivés d'acides aminés, comme par exemple les dérivés de la tyrosine.

Dans tous les cas, le (ou les additifs) préconisé(s) dans l'invention peu(ven)t être mélangé(s) à un ou plusieurs alcools (monoalcools ou polyols) renfermant par exemple de 1 à 6 atomes de carbone, plus particulièrement le mono-, le di- ou le tri-éthylèneglycol, l'éthanol ou le méthanol, ce dernier étant l'alcool préféré. Cet alcool (ou ces alcools) est (sont) ajouté(s) en général en des proportions allant de 0,5 à 20 % en masse, de préférence de 1 à 10 % en masse par rapport à l'eau présente dans le fluide à traiter. L'additif (ou les mélanges d'additifs) considéré(s) dans l'invention peut(vent) être alors préalablement dissous en milieu hydro-alcoolique et ensuite ajouté(s) au milieu à traiter, de façon à obtenir des concentrations finales en additif(s) allant en général de 0,05 à 5 % en masse, de préférence de 0,1 à 2 % en masse par rapport à l'eau présente dans le fluide à traiter.

Les additifs ou mélange d'additifs, essentiellement hydrosolubles, considérés dans l'invention peuvent être utilisés soit en milieu eau pure, par exemple dans de l'eau de condensation, soit en milieu salin, par exemple dans de l'eau de production dans l'eau de mer ou dans la saumure.

La description complète de toutes demandes, tous brevets et publications, cités ci-dessus et ci-dessous, et des demandes françaises correspondantes 97/10118 et 97/10119, déposées le 05/08/97 est incluse par référence dans la présente description.

L'invention sera mieux comprise à la lecture des expérimentations suivantes, nullement limitatives. Les exemples 4, 5, 10 et 11 sont donnés à titre comparatif et ne font pas partie de l'invention.

### EXEMPLE 1

La procédure expérimentale de sélection des additifs est menée sur des hydrates de tétrahydrofuranne (THF). Une solution eau pure/THF (80/20 en masse) forme des hydrates sous pression atmosphérique à 4 °C (voir : *"Kinetic Inhibitors of Natural Gas Hydrates",* Sloan, E.D. et al.; 1994).

Le dispositif utilisé est constitué de tubes de diamètre 16 mm, dans lesquels sont introduits 8 ml d'une solution aqueuse à 20 % en masse de THF contenant éventuellement l'additif à tester. On introduit dans chaque tube une bille en verre d'un diamètre de 8 mm, afin d'assurer un brassage correct de la solution. Les tubes sont placés sur un agitateur rotatif, qui tourne à 20 tours/min.. Ce dernier est placé dans une enceinte réfrigérée à 2 °C.

Le principe de ce test est de déterminer le temps Δt nécessaire pour former une quantité donnée d'hydrates. Ce temps Δt correspond à l'intervalle mesuré entre le moment où on observe la formation des hydrates (apparition d'un trouble) et le moment ou un bouchon d'hydrates d'1cm d'épaisseur se forme dans le tube.

Chaque série de tests est menée en présence d'un mélange de référence ne contenant pas d'additif, et les Δt fournis pour un additif correspondent à une moyenne des temps mesurés sur 16 essais.

Dans les conditions opératoires décrites ci-dessus, les solutions eau pure/THF ont un Δt moyen de 17,0 minutes.

Dans les conditions opératoires mises en oeuvre, l'addition de 0,5 % en masse de monométhacrylate de polyéthylène glycol comportant 6 enchaînements éthylène glycol, dénommé M dans la suite du texte, ralentit nettement la vitesse de croissance des cristaux d'hydrate de THF. Le Δt moyen passe de 17 minutes pour l'eau à 21,4 minutes en présence d'additif.

A partir de ce macromère M deux homopolymères de masses moléculaires moyennes différentes ont été synthétisés par polymérisation radicalaire en phase aqueuse. Ces polymères sont nommés respectivement homopolymère A et homopolymère B et comportent respectivement en moyenne 45 unités macromère et 100 unités macromère. L'addition de 0,5 % de l'homopolymère A dans le milieu prolonge le Δt à 30,7 minutes, alors que le Δt moyen obtenu lors de l'addition de 0,5 % de l'homopolymère B est de 25,4 minutes.

Le macromère M a également été copolymérisé avec une unité macromère de type monoacrylate de polypropylène glycol comportant 3 enchaînements propylène glycol en chaîne latérale. Le copolymère C obtenu contient en moyenne 25 unités macromère dans des proportions de (75/25 respectivement en macromère M et en macromère monoacrylate de propylène glycol). Dans les conditions de tests mises en oeuvre, le Δt moyen déterminé pour le copolymère C est de 31,2 minutes.

### EXEMPLE 2

La procédure expérimentale de l'exemple 1 est répétée en remplaçant l'eau pure par un mélange eau pure + 5 % de méthanol en masse et en abaissant la température de l'enceinte réfrigérée à -1 °C.

Dans ces conditions, le Δt moyen des solutions eau pure + 5 % de méthanol/THF en l'absence d'additif est de 23,0 minutes.

L'addition de 0,5 % en masse de macromère M, prolonge le Δt moyen à 26,3 minutes.

### EXEMPLE 3

La procédure expérimentale de l'exemple 1 est répétée en remplaçant l'eau pure par une solution de NaCl 3,5 % en masse, la température de l'enceinte réfrigérée est abaissée à -1 °C. Dans ces conditions, le Δt moyen des solutions NaCl/THF en l'absence d'additif est de 22,3 minutes.

Les valeurs de Δt moyen déterminées respectivement pour le macromère M, l'homopolymère A et le copolymère C sont respectivement de 27,1 minutes, 33,1 minutes et 29,8 minutes.

### EXEMPLE 4 (comparatif)

Différents additifs sortant du cadre de l'invention ont été testés à titre de comparaison dans les conditions décrites dans l'exemple 1 :
- Produit D : Polyvinylpyrrolidone (masse moléculaire moyenne en poids : 1,5 million).
- Produit E : Polyacrylamide (masse moléculaire moyenne en poids : 1,0 million).
- Produit F : Copolymère acrylamide/acide acrylique -40/60- (masse moléculaire moyenne en poids : 1,0 million).
- Produit G : GAFFIX VC - 713 (N - vinyl - 2 - pyrrolidone / N-vinyl-ε-caprolactame /diméthylaminoéthyl méthacrylate).
- Produit H : Copolymère acide acrylique/acrylate de butyle -55/45- (masse moléculaire moyenne en poids : 8,0 millions ; 0,5 % en masse).

Dans les conditions de tests mises en oeuvre, ces additifs présentent des Δt nettement plus courts que ceux des substances mentionnées dans l'invention, comme le montrent les résultats rassemblés dans le tableau ci-dessous.

### EXEMPLE 5 (comparatif)

Le produit H, sortant du cadre de l'invention, a été testé à titre de comparaison dans les conditions décrites dans l'exemple 3.

Dans les conditions de tests mises en oeuvre, cet additif présente un Δt nettement plus court que ceux des substances mentionnées dans l'invention, comme le montre le résultat indiqué dans le tableau 1 ci-dessous.

**TABLEAU 1**

| Additif (% molaire des motifs) | Concentration (% en masse) | Conditions opératoires | Δt (min) |
|---|---|---|---|
| Ex. 1 : | | | |
| **- sans additif** | - | ***eau pure*/*THF à 2°C*** | **17,0** |
| - Macromère M | 0.5 | " " | 21,4 |
| - Homopolymère A | 0,5 | " " | 30,7 |
| - Homopolymère B | 0,5 | " " | 25,4 |
| - Copolymère C | 0,5 | " " | 31,2 |
| | | | |

| Ex. 2 : | | | |
|---|---|---|---|
| **- sans additif** | - | ***eau* + 5% *MeOH***/***THF à -1°C*** | **23,0** |
| - Macromère M | 0,5 | " " | 26,3 |
| | | | |

| Ex.3 : | | | |
|---|---|---|---|
| - **sans additif** | - | ***NaCl 3,5%*/*THF à -1°C*** | **22,3** |
| - Macromère M | 0,5 | " " | 27,1 |
| - Homopolymère A | 0,5 | " " | 33,1 |
| - Copolymère C | 0,5 | " " | 29,8 |

| Ex.4 : | | | |
|---|---|---|---|
| **- sans additif** | - | ***eau pure* /*THF à 2°C*** | **17,0** |
| - Produit D : | 0,5 | " " | 19,0 |
| - Produit E : | 0,5 | " " | 17,1 |
| - Produit F : | 0,5 | " " | 7,7 |
| - Produit G : | 0,5 | " " | 12,9 |
| | 0,3 | " " | 12,9 |
| - Produit H : | 0.5 | " " | 13,1 |
| | | | |

| Ex.5 : | | | |
|---|---|---|---|
| **- sans additif** | - | ***NaCl 3,5%*/*THF à -1°C*** | **22,3** |
| - Produit H : | 0.3 | " " | 20.4 |

### EXEMPLE 6

Pour tester l'efficacité des produits utilisés dans le procédé de l'invention, en présence d'hydrates de méthane, on a procédé à des essais de formation d'hydrates à partir de gaz et d'eau, à l'aide de l'appareillage décrit ci-après.

L'appareillage comporte une boucle de 10 mètres constituée de tubes de diamètre intérieur égal à 7,7 mm, un réacteur de 2 litres comprenant une entrée et une sortie pour le gaz, une aspiration et un refoulement pour le mélange eau et additif initialement introduit. Le réacteur permet de mettre la boucle sous pression. Des tubes de diamètre analogue à ceux de la boucle assurent la circulation du fluide de la boucle au réacteur, et inversement, par l'intermédiaire d'une pompe à engrenages placée entre les deux. Une cellule saphir intégrée dans le circuit permet une visualisation du liquide en circulation et des hydrates quand ils se forment.

Pour déterminer l'efficacité des additifs selon l'invention, on introduit le fluide (eau et additif) dans le réacteur. L'installation est ensuite portée sous une pression de 7 MPa. La solution est homogénéisée par sa circulation dans la boucle et le réacteur pendant une heure à 20 °C. La pression est maintenue constante par apport de méthane, et on impose une diminution progressive de la température (0,5 °C/min) de 20 °C à 3 °C, qui correspond à la température expérimentale choisie.

Le principe de ces essais est de déterminer, d'une part la température de formation des hydrates de méthane dans la boucle et d'autre part d'évaluer la vitesse de croissance et la quantité de cristaux d'hydrates formés. La détection de la formation des hydrates est détectée par une exothermie et une augmentation de la consommation de gaz.

En absence d'additif (milieu : eau désionisée), les hydrates de méthane se forment à une température voisine de 10,8 °C. A partir de la formation des premiers cristaux, on observe deux phases en ce qui concerne la consommation de gaz. Dans la première phase (environ 5 minutes) l'apport en gaz est très faible, puis, dans la seconde phase il devient extrêmement important (ouverture maximale du débitmètre) jusqu'au blocage complet de la circulation du mélange fluide + hydrates dans l'ensemble boucle + réacteur. La seconde phase, correspondant à la croissance et à l'agglomération des cristaux, dure 28 minutes et la consommation totale est en moyenne de 17 normaux litres.

L'addition de 0,5 % en masse du macromère M, par rapport à l'eau, diminue légèrement la température de formation des hydrates de méthane (10,3 °C), dans les conditions de pression et de température imposées pour ce test et la consommation de gaz présente également deux phases. La première phase est analogue à celle observée en eau pure, la seconde phase, représentative des phénomènes de croissance des cristaux, se déroule sur une durée moyenne de 50 minutes, l'ouverture du débitmètre est d'environ 50 % de sa capacité maximale. En conséquence, pour arriver à une consommation totale quasiment identique de 17 normaux litres, il a fallu environ deux fois plus de temps, par ralentissement de la croissance des cristaux.

### EXEMPLE 7

On a repris la procédure expérimentale de l'exemple 1 dans le but de déterminer :
- premièrement, le temps de latence tl précédant la formation des hydrates. Ce temps de latence correspond à l'intervalle mesuré entre le moment où les tubes sont introduits dans l'enceinte réfrigérée et le moment où on observe la formation des hydrates (apparition d'un trouble).
- deuxièmement, le temps Δt nécessaire pour former une quantité donnée d'hydrates. Ce temps Δt correspond à l'intervalle mesuré entre le moment où on observe la formation des hydrates (apparition d'un trouble) et le moment ou un bouchon d'hydrates d'1cm d'épaisseur se forme dans le tube.

Le test dure 6 heures. Lorsque dans la majorité des essais les hydrates ne se sont pas formés (effet cinétique prépondérant), la concentration en additif est diminuée de façon à pouvoir déterminer des valeurs de Δt moyennes.

Chaque série de tests est menée en présence d'un mélange de référence ne contenant pas d'additif, et les valeurs de tl et de Δt fournis pour un additif correspondent à une moyenne des temps mesurés sur 16 essais.

Dans les conditions opératoires décrites ci-dessus, les solutions eau pure/THF ont un temps de latence moyen de 35 minutes et un Δt moyen de 17,0 minutes.

Deux copolymères comportant des structures cinétique et inhibitrice de croissance et/ou d'agglomération ont été synthétisées. Le premier - copolymère A - de masse 150 000 en poids contient des unités monomères vinyl-pyrrolidone et des unités macromères de type monométhacrylate de polyéthylène glycol comportant 6 enchaînements éthylène glycol, dénommé macromère M dans la suite du texte. Le second copolymère - copolymère B - est obtenu en polymérisant le macromère M avec de l'acrylamide et de l'acrylamido méthyl propane sulfonate (AMPS). L'association de ces deux types de structure au sein d'une même macromolécule a permis de prolonger considérablement les temps de latence, qui passent respectivement à 165 et 264 minutes pour les copolymères A et B et de ralentir nettement la vitesse de croissance et/ou d'agglomération des cristaux d'hydrate de THF, puisque les Δt moyens passent de 17 minutes pour l'eau à 28,4 et 24,0 minutes pour les copolymères A et B.

De la même manière, le mélange d'additif cinétique et d'inhibiteur de croissance et/ou d'agglomération permet à la fois un gain en temps de latence et un ralentissement de la vitesse de formation du bouchon d'hydrates.

Un copolymère C, obtenu en polymérisant le macromère M et un macromère de type monoacrylate de polypropylène glycol comportant 3 enchaînements propylène glycol en chaîne latérale et contenant en moyenne 25 unités macromères, dans des proportions de 75/25 respectivement en macromère M et en macromère monoacrylate de propylène glycol, est mélangé avec un échantillon de poly-N-vinyl-pyrrolidone cité dans l'exemple 4 (Produit D) dans des proportions 50 : 50 en masse. L'addition de 0,5 % en masse par rapport à l'eau de ce mélange permet de prolonger le temps de latence à 146 minutes et le temps de blocage moyen à 22,0 minutes.

Un second mélange est composé de 50 % en masse de l'homopolymère A défini dans l'exemple 1 (comportant en moyenne 45 unités macromères) et de 50 % en masse de GAFFIX VC-713 (défini plus haut dans l'exemple 4 : Produit G). L'addition de 0,5 % en masse de ce mélange dans le milieu multiplie par 6,8 le temps de latence et prolonge le Δt moyen de plus de 13 minutes.

### EXEMPLE 8

La procédure expérimentale de l'exemple 7 est répétée en remplaçant l'eau pure par un mélange eau pure + 5 % de méthanol en masse et en abaissant la température de l'enceinte réfrigérée à -1 °C.

Dans ces conditions, le temps de latence moyen des solutions eau pure + 5 % de méthanol/THF en l'absence d'additif est de 29 minutes et le Δt moyen est de 23,0 minutes.

L'addition de 0,5 % en masse par rapport à la teneur en eau du milieu de copolymère A tel qu'il est défini ci-dessus permet de multiplier par 6,5 le temps de latence moyen et le Δt moyen est de 33,5 minutes.

### EXEMPLE 9

La procédure expérimentale de l'exemple 7 est répétée en remplaçant l'eau pure par une solution de NaCl 3,5 % en masse, la température de l'enceinte réfrigérée est abaissée à -1 °C. Dans ces conditions, le temps de latence moyen des solutions NaCl/THF en l'absence d'additif est de 37 minutes et le Δt moyen des solutions NaCl/THF en l'absence d'additif est de 22,3 minutes.

L'addition de 0,5 % en masse par rapport à la teneur en eau du milieu de copolymère B décrit dans l'exemple 7 inhibe totalement la formation des hydrates. Lorsque la teneur en copolymère B du milieu est ramenée à 0,3 % en masse par rapport à la teneur en eau, le temps de latence moyen est multiplié par plus de 4 et le Δt moyen est prolongé de pratiquement 10 minutes.

Le mélange homopolymère A + GAFFIX VC-713 (50/50) additionné à 0,5 % en masse permet d'obtenir un temps de latence moyen de 190 minutes et un Δt moyen de 25,8 minutes. Enfin, le mélange d'homopolymère A et de copolymère acrylamide / AMPS (88/12) de masse 2.10⁶ dans des proportions 50/50 inhibe totalement la formation des hydrates pendant 6 heures à la teneur de 0,5 % en masse. Utilisé à 0,3 % en masse, ce mélange multiplie le temps de latence par environ 5 et le Δt moyen est quant à lui de 26,8 minutes.

### EXEMPLE 10 (comparatif)

Cet exemple rappelle les résultats obtenus (Δt) lorsqu'on utilise les produits D à H définis dans l'exemple 4, aux concentrations indiquées dans le tableau 2 ci-dessous.

Dans les conditions de tests mises en oeuvre (analogues à celles de l'exemple 7), ces additifs présentent des Δt nettement plus courts que ceux des substances mentionnées dans l'invention, comme le montrent les résultats rassemblés dans le tableau 2 ci-dessous. On a également fait figurer, pour chacun des produits D à H à la concentration indiquée, le temps de latence (tl), défini comme dans l'exemple 7.

### EXEMPLE 11 (comparatif)

Le produit H, sortant du cadre de l'invention, a été testé à titre de comparaison dans les conditions décrites dans l'exemple 9.

Dans les conditions de tests mises en oeuvre, cet additif présente un Δt nettement plus court que ceux des substances mentionnées dans l'invention, comme le montre le résultat indiqué dans le tableau 2 ci-dessous. On a fait figurer le temps de latence (tl) défini comme dans l'exemple 7.

**TABLEAU 2**

| Additif (% molaire des motits) | Concentration (% en masse) | Conditions opératoires | Temps de latence (min) | Δt (min) |
|---|---|---|---|---|
| Ex. 7 : | | | | |
| **- sans additif** | **-** | ***eau pure*/*THF à 2°C*** | **35** | **17,0** |
| - Copolymère A | 0,5 | " " | 165 | 28.4 |
| - Copolymère B | 0,5 | " " | 264 | 24,0 |
| - Copolymère C + PVP | 0.5 | " " | 146 | 22,0 |
| - Homopolymère A + VC-713 | 0,5 | " " | 240 | 30,7 |
| | | | | |

| Ex. 8: | | | | |
|---|---|---|---|---|
| **- sans additif** | - | ***eau* + 5% *MeOH***/***THF à -1°C*** | **29** | **23,0** |
| - Copolymère A | 0,5 | " " | 191 | 33,5 |
| | | | | |

| Ex.9 : | | | | |
|---|---|---|---|---|
| **- sans additif** | - | ***NaCl 3,5%*/*THF à -1°C*** | **37** | **22,3** |
| - Copolymère B | 0,5 | " " | >360 | n.d.* |
| | 0,3 | " " | 153 | 31,7 |
| - Homopolymère A + VC-713 | 0,5 | " " | 190 | 25,8 |
| - Homopolymère A + AA/AMPS | 0,5 | " " | >360 | n.d.* |
| | 0,3 | " " | 188 | 26,8 |

| Ex. 10 : | | | | |
|---|---|---|---|---|
| **- sans additif** | - | ***eau pure* /*THF à 2°C*** | **35** | **17,0** |
| - Produit D : | 0.5 | " " | 135 | 19,0 |
| - Produit E : | 0,5 | " " | 100 | 17.1 |
| - Produit F : | 0,5 | " " | 136 | 7.7 |
| - Produit G : | 0,3 | " " | 150 | 12,9 |
| - Produit H : | 0.5 | | 90 | 13,1 |
| | | | | |

| Ex. 11 : | | | | |
|---|---|---|---|---|
| **- sans additif** | - | ***NaCl 3,5%*/*THF à -1°C*** | **37** | **22,3** |
| - Produit H : | 0,5 | " " | 57 | 20,4 |

| | | | | |
|---|---|---|---|---|
| * n.d. : n'a pas pu être déterminé. | | | | |

### EXEMPLE 12

On a repris la procédure de l'exemple 6.

L'addition de 0,5 % en masse du copolymère B - tel que décrit dans l'exemple 7, par rapport à l'eau, diminue de façon importante la température de formation des hydrates de méthane tf = 5,1 °C.

Dans les conditions de pression et de température imposées pour ce test, la consommation de gaz présente également deux phases. En raison du net abaissement de la température de formation des hydrates observé dans ce cas, d'une part la première phase de consommation est différée dans le temps ; d'autre part, la seconde phase allant jusqu'au blocage est considérablement allongée (elle dure environ 2 heures, au lieu de 28 minutes pour l'eau pure), pour une consommation totale de gaz quasiment identique de 17 normaux litres.

La mise en jeu du copolymère B a permis de combiner les effets de retard de formation des cristaux et de ralentissement de leur croissance et/ou de leur agglomération.

Les exemples qui précèdent peuvent être répétés avec des résultats analogues en substituant les réactifs et/ou les conditions générales ou particulières décrites dans l'invention à ceux mis en oeuvre dans ces exemples.

Au vu de la description qui précède, l'homme du métier peut aisément déterminer les caractéristiques essentielles de l'invention et, sans s'écarter de l'esprit et de la portée de celle-ci, y apporter divers changements ou modifications pour l'adapter à diverses utilisations et conditions de mise en oeuvre.

## Revendications

1. Procédé pour ralentir la croissance et/ou l'agglomération et éventuellement pour retarder la formation des hydrates au sein d'un fluide comprenant de l'eau et un gaz, dans des conditions où des hydrates peuvent se former à partir de l'eau et du gaz, **caractérisé en ce qu'**on incorpore audit fluide au moins un composé essentiellement hydrosoluble choisi parmi
- les macromères de polyoxyalkylène glycol définis par la formule générale : 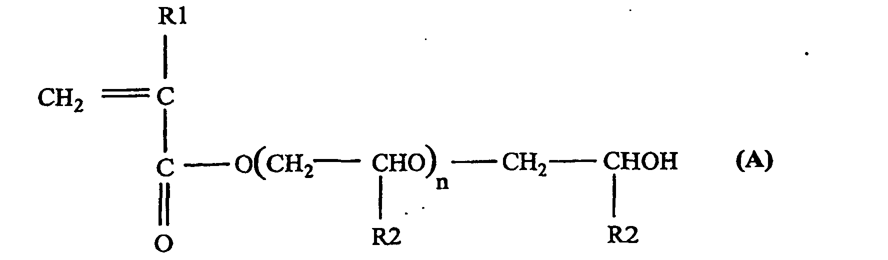 dans laquelle R1 représente un hydrogène ou un groupement alkyl comportant de 1 à 6 atomes de carbone ; R2 représente un atome d'hydrogène ou un groupement alkyle ; et n qui représente le degré de polymérisation a une valeur comprise entre 1 et 140,
- et leurs homopolymères et copolymères.

2. Procédé selon la revendication 1, **caractérisé en ce que**, dans la formule (A), le degré de polymérisation n a une valeur de 3 à 140.

3. Procédé selon l'une des revendications 1 et 2, **caractérisé en ce que** ledit macromère, homopolymère ou copolymère a une masse moléculaire moyenne de 160 g.mol⁻¹ à plusieurs millions.

4. Procédé selon la revendication 3, **caractérisé en ce que** ladite masse moléculaire moyenne est de 250 g. mol⁻¹ à plusieurs millions.

5. Procédé selon l'une des revendications 1 à 4, **caractérisé en ce que** ledit macromère, homopolymère ou copolymère est ajouté dans le fluide à traiter à une concentration de 0,05 à 5 % par rapport à l'eau présente.

6. Procédé selon la revendication5, **caractérisé en ce que** ladite concentration est de 0,1 à 2 % en masse par rapport à l'eau présente.

7. Procédé selon l'une des revendications 1 à 6 **caractérisé en ce que**, pour en outre retarder la formation des hydrates, on incorpore en outre audit fluide au moins un inhibiteur cinétique des hydrates.

8. Procédé selon la revendication 7, **caractérisé en ce que** ledit inhibiteur cinétique des hydrates est au moins un homo- ou copolymère formé d'au moins un composé monomère choisi parmi :
- le N-vinyl-2-lactame avec un cycle lactame comprenant de 5 à 7 atomes éventuellement modifié par au moins une chaîne alkyle,
- l'acrylate de sodium, le méthacrylate de sodium ou les esters d'acrylate ou de méthacrylate possédant des groupements organiques, comportant éventuellement des hétéroatomes et étant éventuellement chargés positivement, négativement ou possédant à la fois des charges positive et négative,
- l'acrylamide, le méthacrylamide ou l'acrylamide on le méthacrylamide N- ou N,N-substitué par des groupements organiques linéaires ou cycliques, comportant éventuellement des hétéroatomes et étant éventuellement charges positivement, négativement ou possédant à la fois des charges positive et négative,
- le N-vinyl acétamide ou le N-alkyl vinyl acétamide,
- un carboxylate de vinyle et
- une N-acyl polyalkylène imine.

9. Procédé selon l'une des revendications 7 et 8, **caractérisé en ce que** ledit mélange d'additifs comprend, à titre d'inhibiteur cinétique, au moins un composé choisi parmi les polymères naturels, les tensioactifs et les dérivés d'acides aminés, ayant un effet sur la cinétique de formation des hydrates.

10. Procédé selon la revendication 9, **caractérisé en ce que**
- ledit polymère naturel est choisi parmi les polysaccharides naturels tels que l'hydroxy éthyl cellulose (HEC) et autres dérivés cellulosiques, les carraghénanes, le guar, l'agar, la gomme arabique, la caroube, le xanthane, les alginates et le propylène glycol alginate ;
- ledit tensioactif est choisi parmi les tensioactifs composés d'une partie hydrophobe dérivée d'un alcool, d'un acide gras, de dérivés alkylés du phénol, de polyoléfines, de chaînes alkyles longues et d'une tête polaire qui peut être :
- anionique, de type alcoolate, sulfate, sulfonate, phosphate, phosphonate ou acide phosphonique,
- cationique, de type ammonium, phosphonium ou sulfonium,
- ou neutre ;
- et ledit dérivé d'acide aminé est un dérivé de la tyrosine.

11. Procédé selon l'une des revendications 7 à 10, **caractérisé en ce que** le mélange d'additifs est additionné au fluide à traiter à une concentration de 0,05 % à 5 % en masse par rapport à la teneur en eau du milieu.

12. Procédé selon l'une des revendications 7 à 11, **caractérisé en ce que** les proportions respectives d'additif de type cinétique et d'additif inhibiteur de croissance et/ou d'agglomération sont de 5 à 80 % et de 20 à 95 % en masse.

13. Procédé selon la revendication 1, **caractérisé en ce que**, pour retarder la formation des hydrates et ralentir leur vitesse de croissance et/ou leur agglomération, on incorpore audit fluide au moins un additif comprenant au moins un copolymère formé entre
- au moins un macromère de polyoxyalkylène glycol répondant à la formule (A) : 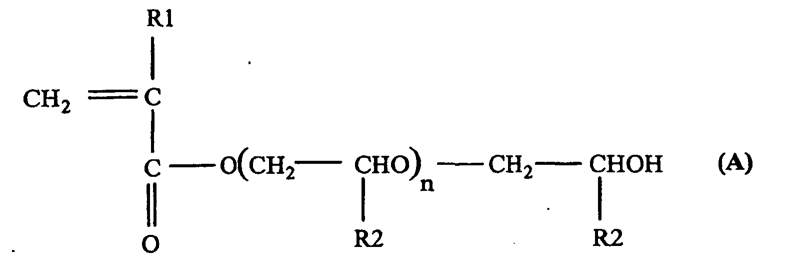 dans laquelle R1 représente un hydrogène ou un groupement alkyle comportant de 1 à 6 atomes de carbone ; R2 représente un atome d'hydrogène ou un groupement alkyle ; n représente le degré de polymérisation et a une valeur comprise entre 1 et 140
- et au moins une unité de type additif cinétique.

14. Procédé selon la revendication 13, **caractérisé en ce que** le degré de polymérisation n est de 3 à 140.

15. Procédé selon l'une des revendications 13 et 14, **caractérisé en ce que** ladite unité de type additif cinétique entrant dans la composition dudit copolymère dérive d'au moins un composé choisie parmi :
- le N-vinyl-2-lactame avec un cycle lactame comprenant de 5 à 7 atomes éventuellement modifié par au moins une chaîne alkyle,
- acrylate de sodium, le méthacrylate de sodium ou les esters d'acrylate ou de méthacrylate possédant des groupements organiques, comportant éventuellement des hétéroatomes et étant éventuellement chargés positivement, négativement ou possédant à la fois des charges positive et négative,
- l'acrylamide, le méthacrylamide ou l'acrylamide ou le méthacrylamide N- ou N,N-substitué par des groupements organiques linéaires ou cycliques, comportant éventuellement des hétéroatomes et étant éventuellement chargés positivement, négativement ou possédant à la fois des charges positive et négative,
- le N-vinyl acétamide ou le N-alkyl vinyl acétamide,
- un carboxylate de vinyle,
- une N-acyl polyalkylène imine.

16. Procédé selon l'une des revendications 13 à 15, **caractérisé en ce que** ledit copolymère formé entre au moins un macromère et au moins une structure de type additif cinétique répond à la formule (B) : 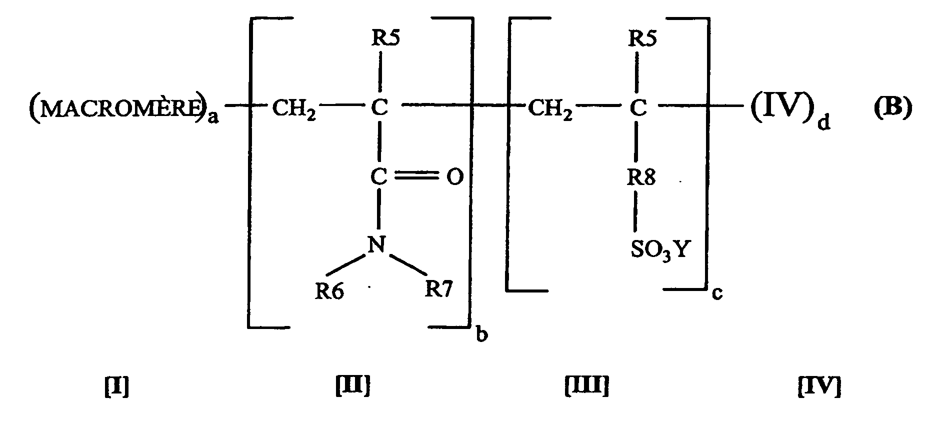 dans laquelle l'entité MACROMÈRE représente une ou plusieurs unités macromères définies par la formule générale (A), R5 est un atome d'hydrogène ou un groupement méthyle, R6 est un atome d'hydrogène ou un groupement hydrocarboné de type alkyle, cycloalkyle, aryle ou alkylaryle contenant de 1 à 30 atomes de carbone, R7 est un atome d'hydrogène ou un groupement hydrocarboné de type alkyle, cycloalkyle, aryle ou alkylaryle contenant de 1 à 30 atomes de carbone, R6 et R7 pouvant être identiques ou différents ; R8 est choisi parmi la liaison simple, les groupements divalents -CH₂- et les groupements divalents -C₆H₄- et -CONHC(CH₃)₂-CH₂-, Y est un atome d'hydrogène, un atome de métal alcalin ou un groupement ammonium ; le monomère (**IV**) est choisi parmi les structures cinétiques décrites dans la revendication 9 et est tel qu'il soit différent des monomères **[I]**, **[II]** et **[III]**; la formule du copolymère (B) étant telle que la somme a + b+ c + d = 1, avec a compris entre 0,01 et 1 et b, c et d compris chacun entre 0 et 0,99.

17. Procédé selon l'une des revendications 13 à 16, **caractérisé en ce que** ledit copolymère est additionné au fluide à traiter à une concentration de 0,05 à 5 % en masse par rapport à la teneur en eau du milieu.

18. Procédé selon l'une des revendications 13 à 17, **caractérisé en ce que** l'on incorpore en outre au moins un composé choisi parmi les polymères naturels, les tensioactifs et les dérivés d'acides aminés, ayant un effet sur la cinétique de formation des hydrates.

19. Procédé selon la revendication 18, **caractérisé en ce que**
- ledit polymère naturel est choisi parmi : les polysaccharides naturels tels que l'hydroxy éthyl cellulose (HEC) et autres dérivés cellulosiques, les carraghénanes, le guar, l'agar, la gomme arabique, la caroube, le xanthane, les alginates et le propylène glycol alginate ;
- ledit tensioactif est choisi parmi les tensioactifs composés d'une partie hydrophobe dérivée d'un alcool, d'un acide gras, de dérivés alkylés du phénol, de polyoléfines, de chaînes alkyles longues et d'une tête polaire qui peut être :
- anionique, de type alcoolate, sulfate, sulfonate, phosphate, phosphonate ou acide phosphonique,
- cationique, de type ammonium, phosphonium ou sulfonium,
- ou neutre.
- et le dérivé d'acide aminé est un dérivé de la tyrosine.

20. Procédé selon l'une des revendications 1 à 19, **caractérisé en ce que** l'on utilise en outre au moins un alcool choisi parmi les monoalcools et les polyols renfermant de 1 à 6 atomes de carbone, en une proportion de 0,5 à 20 % en masse par rapport à l'eau présente dans le fluide à traiter.

21. Procédé selon la revendication 20, **caractérisé en ce que** ledit alcool est le mono-, le di- ou le tri-éthylèneglycol, l'éthanol ou le méthanol.

22. Procédé selon l'une des revendications 20 et 21, **caractérisé en ce qu'**au moins un additif selon l'une des revendications 1 à 19 est préalablement dissous en milieu hydro-alcoolique puis ajouté au milieu à traiter, de façon à obtenir une concentration finale en ledit additif de 0,05 à 5 % en masse par rapport à l'eau présente dans le fluide à traiter.

## Patentansprüche

1. Verfahren zum Verzögern des Wachstums- und/oder der Agglomeration und gegebenenfalls zur Verzögerung der Bildung der Hydrate in einem Fluid, das Wasser und ein Gas umfasst, unter Bedingungen, wo die Hydrate sich aus dem Wasser und dem Gas bilden können, **dadurch gekennzeichnet, dass** man dem Fluid wenigstens eine im wesentlichen wasserlösliche Verbindung einverleibt, gewählt unter
- den Makromeren von Polyoxyalkylenglycol, die durch die allgemeine Formel definiert sind: 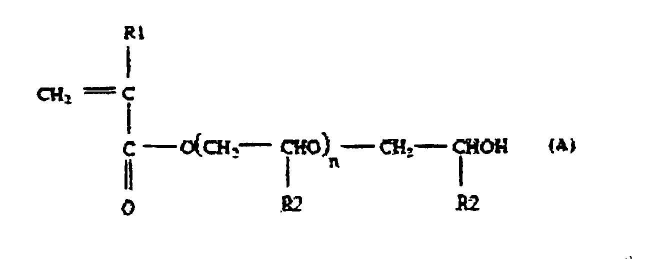
- in welcher R1 ein Wasserstoff oder eine Alkylgruppe darstellt, die 1 bis 6 Kohlenstoffatome umfasst; R2 ein Wasserstoffatom oder eine Alkylgruppe darstellt; und n den Polymerisationsgrad bei einem Wert zwischen 1 und 140 darstellt,
- und deren Homopolymere und Copolymere.

2. Verfahren nach Anspruch 1, **dadurch gekennzeichnet, dass** in der Formel (A) der Polymerisationsgrad n einen Wert von 3 bis 140 hat.

3. Verfahren nach einem der Ansprüche 1 und 2, **dadurch gekennzeichnet, dass** das Makromer, Homopolymer oder Copolymer eine mittlere molekulare Masse von 160 g·mol⁻¹ bis mehrere Millionen hat.

4. Verfahren nach Anspruch 3, **dadurch gekennzeichnet, dass** die mittlere Molekularmasse 250 g·mol⁻¹ bis mehrere Millionen ist.

5. Verfahren nach einem der Ansprüche 1 bis 4, **dadurch gekennzeichnet, dass** das Makromer, Homopolymer oder Copolymer in das zu behandelnde Fluid bei einer Konzentration von 0,05 bis 5% im Verhältnis zum vorliegenden Wasser zugegeben wird.

6. Verfahren nach Anspruch 5, **dadurch gekennzeichnet, dass** die Konzentration 0,1 bis 2 Masseprozent im Verhältnis zum vorliegenden Wasser ist.

7. Verfahren nach einem der Ansprüche 1 bis 6, **dadurch gekennzeichnet, dass** man, um außerdem die Bildung der Hydrate zu verzögern, außerdem dem Fluid wenigstens einen kinetischen Inhibitor der Hydrate einverleibt.

8. Verfahren nach Anspruch 7, **dadurch gekennzeichnet, dass** der kinetische Inhibitor der Hydrate wenigstens ein Homo- oder Copolymer ist, dass aus wenigstens einer Monomerverbindung gebildet wird, gewählt unter:
- N-Vinyl-2-Lactam mit einem Lactamring der 5 bis 7 Atome umfasst, ggf. modifiziert durch wenigstens eine Alkylkette,
- Natriumacrylat, Natriummethacrylat oder Acrylatester oder Methacrylatester, die organische Gruppen aufweisen, die gegebenenfalls Heteroatome umfassen und gegebenenfalls positiv, negativ oder gleichzeitig negative und positive Ladungen aufweisend geladen sind,
- Acrylamid, Methacrylamid oder Acrylamid oder Methacrylamid, die N- oder N,N-substituiert sind durch organische lineare oder cyclische Gruppen, die gegebenenfalls Heteroatome umfassen und die gegebenenfalls positiv, negativ oder gleichzeitig positive und negative Ladungen aufweisend geladen sind,
- N-Vinylacetamid oder N-Alkylvinylacetamid
- ein Vinylcarboxylat und
- ein N-Acylpolyalkylenimin.

9. Verfahren nach einem der Ansprüche 7 und 8, **dadurch gekennzeichnet, dass** das Gemisch von Zusätzen als kinetischer Inhibitor wenigstens eine Verbindung umfasst, ausgewählt aus den natürlichen Polymeren, den Tensiden und den Aminosäurederivaten mit einer Wirkung auf die Kinetik der Bildung der Hydrate.

10. Verfahren nach Anspruch 9, **dadurch gekennzeichnet, dass** das natürliche Polymer ausgewählt ist aus den natürlichen Polysacchariden wie die Hydroxyethylzellulose (HEC) und anderen Zellulosederivaten, den Carraghenanen, Guar, Agar, Gummi Arabicum, Johannesbrot (Caroube), Xanthan, den Alginaten und Propylenglycolalginat;
- das Tensid gewählt wird unter den Tensiden, die aus einem hydrophoben Teil, abgeleitet von einem Alkohol, einer Fettsäure, alkylierten Phenolderivaten, Polyolefinen, langen Alkylketten, und einem polaren Kopf zusammengesetzt sind, der sein kann:
- anionisch, vom Alkoholat-, Sulfat-, Sulfonat-, Phosphat-, Phosphonat-, oder Phosphonsäuretyp,
- kationisch vom Ammonium-, Phosphonium- oder Sulfoniumtyp,
- oder neutral
- und das Aminosäurederivat ist ein Tyrosinderivat.

11. Verfahren nach einem der Ansprüche 7 bis 10, **dadurch gekennzeichnet, dass** das Gemisch von Zusätzen dem zu behandelnden Fluid bei einer Konzentration von 0,05 bis 5 Masse-% im Verhältnis zum Wassergehalt des Mediums zugesetzt wird.

12. Verfahren nach einem der Ansprüche 7 bis 11, **dadurch gekennzeichnet, dass** die jeweiligen Anteile an Zusatz vom kinetischen Typ und an Wachstums- und/oder Agglomerierungsinhibitor 5- 80 % und 20 - 95 Masse-% sind.

13. Verfahren nach Anspruch 1, **dadurch gekennzeichnet, dass** man, um die Bildung der Hydrate zu verzögern und deren Wachstums- und/oder deren Agglomerierungsgeschwindigkeit zu verzögern, dem Fluid wenigstens einen Zusatz einverleibt, der wenigstens ein Copolymer umfasst, das gebildet wird zwischen
- wenigstens einem Makromer von Polyoxyalkylenglycol, das der Formel (A) entspricht: 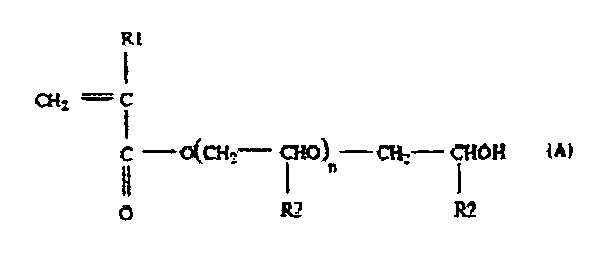
- in welcher R1 ein Wasserstoff oder eine Alkylgruppe darstellt, die 1 bis 6 Kohlenstoffatome umfasst; R2 ein Wasserstoffatom oder eine Alkylgruppe darstellt; n den Polymerisationsgrad bei einem Wert zwischen 1 und 140 darstellt,
- und wenigstens einer Einheit vom kinetischen Zusatztyp.

14. Verfahren nach Anspruch 13, **dadurch gekennzeichnet, dass** der Polymerisationsgrad n 3 bis 140 ist.

15. Verfahren nach einem der Ansprüche 13 und 14, **dadurch gekennzeichnet, dass** die Einheit vom kinetischen Zusatztyp, die in die Zusammensetzung des Copolymers eintritt, von wenigstens einer Verbindung abgeleitet ist, die gewählt ist unter:
- N-Vinyl-2-Lactam mit einem Lactamring der 5 bis 7 Atome umfasst, ggf. modifiziert durch wenigstens eine Alkylkette,
- Natriumacrylat, Natriummethacrylat oder Acrylatester oder Methacrylatester, die organische Gruppen aufweisen, die gegebenenfalls Heteroatome umfassen und gegebenenfalls positiv, negativ oder gleichzeitig negative und positive Ladungen aufweisend geladen sind,
- Acrylamid, Methacrylamid oder Acrylamid oder Methacrylamid, die N- oder N,N-substituiert sind durch organische lineare oder cyclische Gruppen, die gegebenenfalls Heteroatome umfassen und die gegebenenfalls positiv, negativ oder gleichzeitig positive und negative Ladungen aufweisend geladen sind,
- N-Vinylacetamid oder N-Alkylvinylacetamid
- ein Vinylcarboxylat und
- ein N-Acylpolyalkylenimin.

16. Verfahren nach einem der Ansprüche 13 bis 15, **dadurch gekennzeichnet, dass** das zwischen wenigstens einem Makromer und wenigstens einer Struktur vom kinetischen Zusatztyp gebildete Copolymer der Formel (B) entspricht 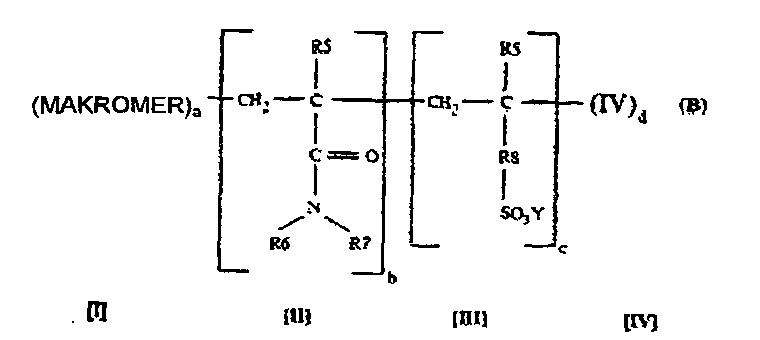 in welcher die MAKROMER-Gesamtheit eine oder mehrere Makromereinheiten darstellt, die durch die allgemeine Formel (A) definiert sind, R5 ein Wasserstoffatom oder eine Methylgruppe ist, R6 ein Wasserstoffatom oder eine Kohlenwasserstoffgruppe vom Alkyl-, Cycloalkyl-, Aryl- oder Alkylaryltyp ist, die 1 bis 30 Kohlenstoffatome enthält, R7 ein Wasserstoffatom oder eine Kohlenwasserstoffgruppe vom Alkyl-, Cycloalkyl-, Aryl- oder Alkylaryltyp ist, die 1 bis 30 Kohlenstoffatome enthätt, R6 und R7 identisch oder verschieden sein können; R8 gewählt ist unter der Einfachbindung, den divalenten -CH₂-Gruppen und den divalenten -C₆H₄- und -CONHC(CH₃)₂-CH₂-Gruppen, Y ein Wasserstoffatom, ein Alkalimetallatom oder eine Ammoniumgruppe ist; das Monomer (IV) wird gewählt unter den in dem Anspruch 9 beschriebenen kinetischen Strukturen und derart ist, dass es verschieden von den Monomeren [I], [II] und [III] ist, wobei die Formel des Copolymers (B) derart ist, dass die Summe a + b + c + d = 1 mit a zwischen 0,01 und 1 und b, c und d jedes zwischen 0 und 0,99 liegt.

17. Verfahren nach einem der Ansprüche 13 bis 16, **dadurch gekennzeichnet, dass** das Copolymer den zu behandelnden Fluid bei einer Konzentration von 0,05 bis 5 Masse-% im Verhältnis zum Wassergehalt des Mediums zugesetzt wird.

18. Verfahren nach einem der Ansprüche 13 bis 17, **dadurch gekennzeichnet, dass** man außerdem wenigstens eine Verbindung einverleibt, die gewählt ist unter den natürlichen Polymeren, den Tensiden und den Amiosäurederivaten mit einer Wirkung auf die Kinetik der Hydratbildung.

19. Verfahren nach Anspruch 18, **dadurch gekennzeichnet, dass**
- das natürliche Polymer ausgewählt ist aus den natürlichen Polysacchariden wie die Hydroxyethylzellulose (HEC) und anderen Zellulosederivaten, den Carraghenanen, Guar, Agar, Gumm, Arabicum, Johannesbrot (Caroube), Xanthan, den Alginaten und Propylenglycolalginat;
- das Tensid gewählt wird unter den Tensiden, die aus einem hydrophoben Teil, abgeleitet von einem Alkohol, einer Fettsäure, alkylierten Phenolderivaten, Polyolefinen, langen Alkylketten, und einem polaren Kopf zusammengesetzt sind, der sein kann:
- anionisch, vom Alkoholat-, Sulfat-, Sulfonat-, Phosphat-, Phosphonat-, oder Phosphonsäuretyp,
- kationisch vom Ammonium-, Phosphonium- oder Sulfoniumtyp,
- oder neutral
- und das Amiosäurederivat ist ein Tyrosinderivat.

20. Verfahren nach einem der Ansprüche 1 bis 19, **dadurch gekennzeichnet, dass** man außerdem wenigstens einen Alkohol, gewählt unter den Monoalkoholen und Polyolen verwendet, der 1 bis 6 Kohlenstoffatome in einem Anteil von 0,5 bis 20 Masseprozent im Verhältnis zum in dem zu behandelnden Fluid vorliegenden Wasser einschließt.

21. Verfahren nach Anspruch 20, **dadurch gekennzeichnet, dass** der Alkohol Mono-, Di- oder Triethylenglycol, Ethanol oder Methanol ist.

22. Verfahren nach einem der Ansprüche 20 und 21, **dadurch gekennzeichnet, dass** wenigstens ein Zusatz gemäß einem der Ansprüche 1 bis 19 vorher im hydro-alkoholischen Medium gelöst wird und dann zu dem zu behandelnden Medium derart zugegeben wird, dass eine Endkonzentration an dem Zusatz von 0,05 bis 5 Masseprozent im Verhältnis zum Wasser erhalten wird, dass in dem zu behandelnden Fluid vorliegt.

## Claims

1. A process for slowing the growth and/or agglomeration and optionally for retarding the formation of hydrates in a fluid comprising water and a gas, under conditions in which hydrates can form from the water and gas, **characterized in that** at least one essentially water-solubte compound selected from :
- polyoxyalkylene glycol macromers is incorporated into said fluid, defined by the general formula: 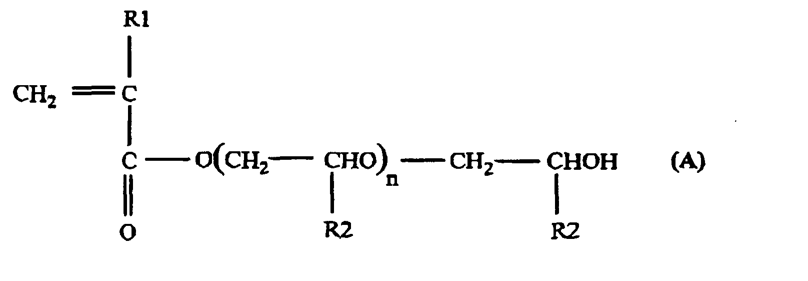 where R1 represents a hydrogen or an alkyl group containing 1 to 6 carbon atoms; R2 represents a hydrogen atom or an alkyl group; and n represents the degree of polymerisation and has a value in the range 1 to 140,
- their homopolymers and their copolymers.

2. A process according to claim 1, **characterized in that** in formula (A), the value of the degree of polymerisation n is 3 to 140.

3. A process according to any one of claims 1 to 2, **characterized in that** said macromer, homopolymer or copolymer has a mass average molecular mass of 160 g.mol⁻¹ to several million.

4. A process according to claim 3, **characterized in that** said mass average molecular mass is 250 g.mol⁻¹ to several millions.

5. A process according to any one of claims 1 to 4, **characterized in that** said macromer, homopolymer or copolymer is added to the fluid to be treated in a concentration of 0.05% to 5% with respect to the water present.

6. A process according to claim 5, **characterized in that** said concentration is 0.1% to 2% by weight with respect to the water present.

7. A process according to any one of claims 1 to 6, **characterized in that**, to further retard the formation of hydrates, at least one kinetic inhibitor of hydrates is also incorporated into said fluid.

8. A process according to claim 7, **characterized in that** said kinetic inhibitor of hydrates is at least one homo- or copolymer formed from at least one monomer compound selected from:
• N-vinyl-2-lactame with a lactame ring containing 5 to 7 atoms, optionally modified by at least one alkyl chain;
• sodium acrylate, sodium methacrylate or acrylate or methacrylate esters containing organic groups optionally containing heteroatoms and optionally being positively or negatively charged, or containing both positive and negative charges;
• acrylamide or methacrylamide, or acrylamide or methacrylamide N- or N,N-substituted by linear or cyclic organic groups optionally containing heteroatoms and optionally being positively or negatively charged, or containing both positive and negative charges;
• N-vinyl acetamide or N-alkyl vinyl acetamide;
• a vinyl carboxylate; and
• an N-acyl polyalkylene imine.

9. A process according to claim 7 or claim 8, **characterized in that** said mixture of additives comprises, as a kinetic inhibitor, at least one compound selected from natural polymers, surfactants and amino acid derivatives, having an effect on the kinetics of hydrate formation.

10. A process according to claim 9, **characterized in that**:
• said natural polymer is selected from natural polysaccharides such as hydroxy ethyl cellulose (HEC) and other cellulose derivatives, carrageens, guar, agar, gum arabic, carob, xanthane, alginates and propylene glycol alginates;
• said surfactant is selected from surfactants composed of a hydrophobic portion derived from an alcohol, a fatty acid, alkylated phenol derivatives, polyolefins, or long alkyl chains, and a polar head which may be:
• anionic, of an alcoholate, sulphate, sulphonate, phosphate, phosphonate or phosphonic acid type;
• cationic, of an ammonium, phosphonium or sulphonium type;
• or neutral; and
• said amino acid derivative is a tyrosine derivative.

11. A process according to any one of claims 7 to 10, **characterized in that** the additive mixture is added to the fluid to be treated in a concentration of 0.05% to 5% by weight with respect to the amount of water in the medium.

12. A process according to any one of claims 7 to 11, **characterized in that** the respective proportions of the kinetic type additive and the growth and/or agglomeration inhibiting additive arc 5% to 80% and 20% to 95% by weight.

13. A process according to claim 1, **characterized in that** to retard the formation of hydrates and slow their rate of growth and/or agglomeration, at least one additive is incorporated into said fluid, said additive comprising at least one copolymer formed between
- at least one polyoxyalkylene glycol macromer, with formula (A): 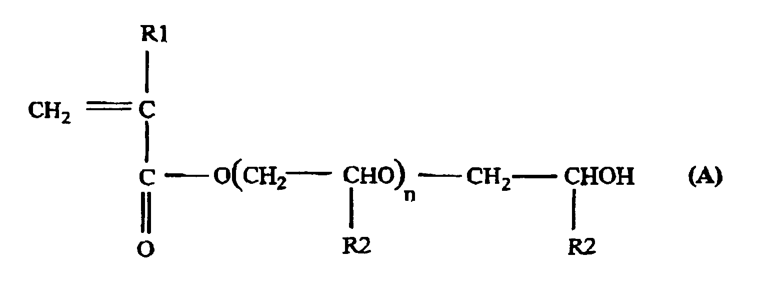 where R1 represents a hydrogen or an alkyl group containing 1 to 6 carbon atoms; R2 represents a hydrogen atom or an alkyl group; and n represents the degree of polymerisation and has a value in the range 1 to 140,
- and at least one kinetic additive type unit

14. A process according to claim 13, **characterized in that** the degree of polymerisation n is 3 to 140.

15. A process according to any one of claims 13 to 14, **characterized in that** said kinetic additive type unit in the composition of said copolymer derives from at least one compound selected from:
• N-vinyl-2-lactame with a lactame ring containing 5 to 7 atoms, optionally modified by at least one alkyl chain;
• sodium acrylate, sodium methacrylate or acrylate or methacrylate esters containing organic groups optionally containing heteroatoms and optionally being positively or negatively charged, or containing both positive and negative charges;
• acrylamide or methacrylamide, or acrylamide or methacrylamide N- or N,N-substituted by linear or cyclic organic groups optionally containing heteroatoms and possibly being positively or negatively charged, or containing both positive and negative charges;
• N-vinyl acetamide or N-alkyl vinyl acetamide;
• a vinyl carboxylate; and
• an N-acyl polyalkylene imine.

16. A process according to any one of claims 13 to 15, **characterized in that** said copolymer formed between at least one macromer and at least one kinetic additive type structure has formula (B): 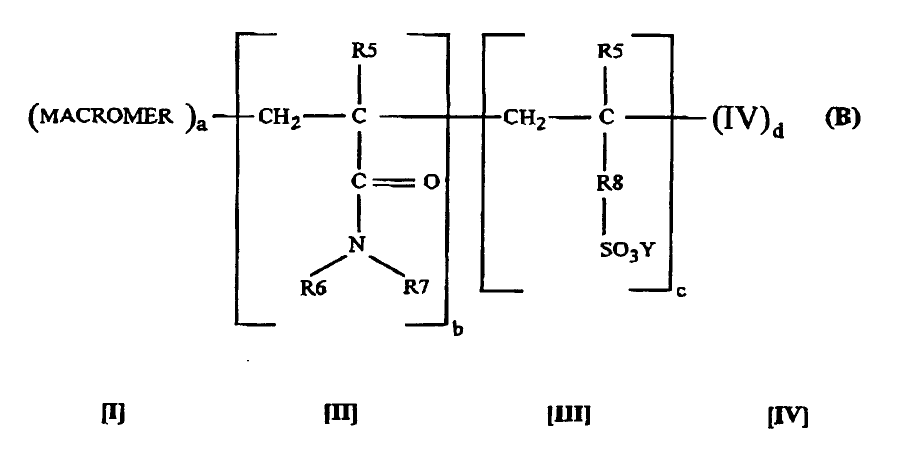 where the entity MACROMER represents one or more macromer units defined by general formula (A), R5 is a hydrogen atom or a methyl group, R6 is a hydrogen atom or an alkyl, cycloalkyl, aryl or alkylaryl hydrocarbon group containing 1 to 30 carbon atoms, R7 is a hydrogen atom or an alkyl, cycloalkyl, aryl or alkylaryl type hydrocarbon group containing 1 to 30 carbon atoms, where R6 and R7 may be identical or different; R8 is selected from a single bond, divalent -CH₂- groups and divalent -C₆H₄- and -CONHC(CH₃)₂-CH₂- groups, and Y is a hydrogen atom, an alkali metal atom or an ammonium group; monomer (IV) is selected from kinetic structures defined in claim 9 and is such that it is different from monomers [I], [II] and [III]; the formula of copolymer (B) being such that the sum a+b+c+d=1, where a is in the range 0.01 to 1 and b, c and d are each in the range 0 to 0.99.

17. A process according to any one of claims 13 to 16, **characterized in that** said copolymer is added to the fluid to be treated in a concentration of 0.05% to 5% by weight with respect to the amount of water in the medium.

18. A process according to any one of claims 13 to 17, **characterized in that** at least one compound selected from natural polymers, surfactants and amino acid derivatives, having an effect on hydrate formation is also incorporated.

19. A process according to claim 18, **characterized in that**:
• said natural polymer is selected from: natural polysaccharides such as hydroxy ethyl cellulose (HEC) and other cellulose derivatives, carrageens, guar, agar, gum arabic, carob, xanthane, alginates and propylene glycol alginates, etc.;
• said surfactant is selected from surfactants composed of a hydrophobic portion derived from an alcohol, a fatty acid, alkylated phenol derivatives, polyolefins, long alkyl chains, and a polar head which may be:
• anionic, of an alcoholate, sulphate, sulphonate, phosphate, phosphonate or phosphonic acid type;
• cationic, of an ammonium, phosphonium or sulphonium type;
• or neutral; and
• the amino acid derivative is a tyrosine derivative.

20. A process according to any one of claims 1 to 19, **characterized in that** at least one alcohol selected from monoalcohols and polyols containing 1 to 6 carbon atoms is also used, in a proportion of 0.5% to 20% by weight with respect to the water present in the fluid to be treated.

21. A process according to claim 20, **characterized in that** said alcohol is mono-, di- or tri-ethylene glycol, ethanol or methanol.

22. A process according to claim 20 or claim 21, **characterized in that** at least one additive according to any one of claims 1 to 19 is first dissolved in a hydroalcoholic medium then added to the medium to be treated, to obtain a final concentration of said additive of 0.05% to 5% by weight with respect to the water present in the fluid to be treated.
